# EUROPÄISCHE PATENTSCHRIFT

(11) **EP 1 557 784 B1**
(45) Veröffentlichungstag und Bekanntmachung des Hinweises auf die Patenterteilung: **24.01.2007**
(21) Anmeldenummer: 05000645.1
(22) Anmeldetag: 14.01.2005
(51) Int. Cl.: G06K 9/46, G06T 7/20, G06T 5/00

(54) **Verfahren und Vorrichtung zum Assistieren beim Führen eines Kraftfahrzeuges**
Vehicle drive assistance method and system
Procédé et système d'aide à la conduite d'un véhicule automobile

(30) Priorität: 23.01.2004 DE 102004003502
(43) Veröffentlichungstag der Anmeldung: 27.07.2005
(73) Patentinhaber: AUDI AG, 85045 Ingolstadt (DE)
(72) Erfinder: Hofbauer, Manfred, 85092 Kösching (DE); Liu, Feiyu, 85055 Ingolstadt (DE)
(74) Vertreter: Thielmann, Frank

(56) Entgegenhaltungen:
- DE-A1- 10 127 034
- US-A- 5 301 115
- US-A- 5 987 174
- PATENT ABSTRACTS OF JAPAN Bd. 1997, Nr. 04, 30. April 1997 (1997-04-30) & JP 08 320998 A (NISSAN MOTOR CO LTD), 3. Dezember 1996 (1996-12-03)
- PATENT ABSTRACTS OF JAPAN Bd. 1997, Nr. 01, 31. Januar 1997 (1997-01-31) & JP 08 249597 A (NISSAN MOTOR CO LTD), 27. September 1996 (1996-09-27)

## Beschreibung

Die vorliegende Erfindung betrifft ein Verfahren zum Assistieren eines Fahrers eines Kraftfahrzeugs durch Erfassen eines Bilds einer Fahrbahn und einer Fahrspurbegrenzung, Platzieren von mehreren Suchfenstern in dem Bild und/oder außerhalb des Bilds anhand einer Fahrspurvorhersage, Ermitteln eines Fahrspurverlaufs durch Erfassen jeweiliger Positionen der Fahrspurbegrenzung in zumindest einigen der mehreren Suchfenstern in dem Bild, und Gewinnen eines Gütemaßes aus der Anzahl der Suchfenster, in denen die Fahrspurbegrenzung erfasst ist. Darüber hinaus betrifft die vorliegende Erfindung eine entsprechende Vorrichtung zum Assistieren eines Fahrers.

Für Fahrerassistenzsysteme ist eine Erkennung von Spurmarkierungen bzw. eines Fahrbahnrands als Basis der Bestimmung der Lage des Fahrzeugs in der Fahrspur notwendig. Als Fahrerassistenzsysteme sind hier zu nennen: Lane Departure Warning zum Erkennen eines Zufahrens auf eine Linie oder Überfahrens einer Linie, Heading Control zum aktiven Halten einer Spur und Adaptive Cruise Control zur Abstandserkennung zu Objekten, die sich auf der Fahrspur befinden.

Die Erkennung von Spurmarkierungen erfolgt heute üblicherweise dadurch, dass in einem Videobild horizontale Suchfenster entlang des Verlaufs der linken und rechten Spurmarkierung positioniert werden. Beispielsweise werden diese Suchfenster in einem Bereich von 5 bis 50 m vor dem Fahrzeug positioniert. Innerhalb der Suchfenster wird der Übergang von dunkler Fahrbahn zu heller Markierung über eine ansteigende bzw. abfallende Flanke detektiert.

Ein diesbezügliches Verfahren zur Vorverarbeitung eines aufgenommenen Bildes für ein Spurmarkierungserkennungssystem ist aus der Druckschrift DE 199 18 050 A1 bekannt. Dabei werden zur Detektion von Fahrspurmarkierungen in einem Videobild horizontale Suchfenster verwendet. Mit Hilfe mehrerer Bildfilter wird ein Anzeiger gewonnen, der eine Fahrspurmarkierung repräsentiert.

In der Regel schwankt die Zuverlässigkeit der vom Spurerkennungssystem gewonnenen Informationen und unterhalb einer vorgegebenen Güte (Aussagesicherheit) wird das System temporär abgeschaltet und der Fahrer über eine entsprechende Anzeige aufgefordert, selbständig zu fahren. Dies kann bei schlechter Markierungsqualität oder schlechten Sichtverhältnissen, z. B. bei Regen oder bei Schnee auf der Fahrbahn, der Fall sein. Damit der Fahrer jedoch bereits vor dem Abschalten einen Hinweis über die Aussagesicherheit bzw. Verfügbarkeit des Fahrerassistenzsystems erhält, wird kontinuierlich ein Gütemaß berechnet und dem Fahrer angezeigt. Bei der Berechnung des Gütemaßes ist es beispielsweise möglich, die Zahl der Suchfenster mit erkannten Spurmarkierungen als Kriterium zu verwenden. Dieses Kriterium kann verschärft werden, wenn nur diejenigen Suchfensterpaare den Verfügbarkeitswert erhöhen, die gleichzeitig für die rechte und linke Spurmarkierung eine Erkennung liefern.

Nachteilig an diesen Systemen ist, dass abhängig vom Öffnungswinkel des Objektivs einer verwendeten Videokamera in Kurven oder bei Fahrspurwechseln die jeweils äußere Fahrbahnmarkierung nicht mehr im Videobild erfasst wird und somit das nach obigen Kriterien ermittelte Verfügbarkeitsmaß sinkt. Infolgedessen kann es zu einer ungewollten Deaktivierung des Spurfindungsalgorithmus bzw. zu einer Neuinitialisierung des Systems kommen. Gerade in derartig gefährlichen Situationen wie dem Fahrspurwechsel, die durch eine Schrägstellung des Fahrzeugs innerhalb der Fahrspur aufgrund eines gewollten Gierwinkelfehlers gekennzeichnet ist, sollte das System solange wie möglich Hilfestellung leisten.

Die Aufgabe der vorliegenden Erfindung besteht somit darin, ein Verfahren und eine Vorrichtung vorzuschlagen, mit denen es möglich ist, eine Fahrerassistenz in gefährlichen Situationen, insbesondere beim Kurvenfahren und Fahrspurwechseln, solange wie möglich aufrechtzuerhalten.

Erfindungsgemäß wird diese Aufgabe gelöst durch ein Verfahren zum Assistieren eines Fahrers eines Kraftfahrzeugs durch Erfassen eines Bilds einer Fahrbahn und einer Fahrspurbegrenzung, Platzieren von mehreren Suchfenstern in dem Bild und/oder außerhalb des Bilds anhand einer Fahrspurvorhersage, Ermitteln eines Fahrspurverlaufs durch Erfassen jeweiliger Positionen der Fahrspurbegrenzung in zumindest einigen der mehreren Suchfenstern in dem Bild, Gewinnen eines Gütemaßes aus der Anzahl der Suchfenster, in denen die Fahrspurbegrenzung erfasst ist, wobei beim Gewinnen des Gütemaßes berücksichtigt wird, wie viele Suchfenster zumindest teilweise innerhalb des Bilds liegen.

Darüber hinaus ist erfindungsgemäß vorgesehen eine Vorrichtung zum Assistieren eines Fahrers eines Kraftfahrzeugs mit einer Erfassungseinrichtung zum Erfassen eines Bilds einer Fahrbahn und einer Fahrspurbegrenzung und einer Datenverarbeitungseinrichtung zum Platzieren von mehreren Suchfenstern in dem Bild und/oder außerhalb des Bilds anhand einer Fahrspurvorhersage, zum Ermitteln eines Fahrspurverlaufs durch Erfassen jeweiliger Positionen der Fahrspurbegrenzung in zumindest einigen der mehreren Suchfenstern in dem Bild, sowie zum Gewinnen eines Gütemaßes aus der Anzahl der Suchfenster, in denen die Fahrspurbegrenzung erfasst ist, wobei in der Datenverarbeitungseinrichtung beim Gewinnen des Gütemaßes berücksichtigbar ist, wie viele Suchfenster zumindest teilweise innerhalb des Bilds liegen.

Der Erfindung liegt der Gedanke zugrunde, bei der Ermittlung des Verfügbarkeitsmaßes bzw. Gütemaßes zunächst die theoretische Maximalzahl der nutzbaren Suchfenster abhängig von Kurvenradius, Spurbreite, Gierwinkelfehler und Objektivöffnungswinkel zu ermitteln und die Anzahl der Suchfenster, in denen Spurmarkierungen erkannt worden sind, hierzu ins Verhältnis zu setzen. Damit kann sicher vermieden werden, dass bei gleichbleibenden Sicht- und Straßenverhältnissen auch in Kurven oder bei Spurwechseln eine ungewollte Deaktivierung bzw. Neuinitialisierung der Fahrspurerkennung erfolgt.

Bei einer besonderen Ausgestaltung des erfindungsgemäßen Verfahrens bzw. der erfindungsgemäßen Vorrichtung werden beim Gewinnen des Gütemaßes nur diejenigen Suchfenster berücksichtigt, die vollständig in dem Bild liegen. Dies hat den Vorteil, dass die Anzahl der praktisch verfügbaren Suchfenster verhältnismäßig rasch ermittelt werden kann. Alternativ können für das Gewinnen des Gütemaßes jedoch auch diejenigen Suchfenster berücksichtigt werden, deren eine Hälfte gegebenenfalls zuzüglich einer halben Spurmarkierungsbreite noch innerhalb des Bildbereichs liegen. Mit dieser zweiten Variante können nahezu alle Markierungsabschnitte, die im Bildbereich liegen, erfasst werden.

Vorzugsweise umfasst die Fahrspurbegrenzung - wie bereits angedeutet - eine Spurmarkierung. Die hellen Spurmarkierungen heben sich in der Regel von der Fahrbahn sehr gut ab und können ohne weiteres erfasst werden. Die Fahrspurbegrenzung kann aber auch den Fahrbahnrand umfassen. Dies ist hilfreich bei untergeordneten Straßen, die keine Spurmarkierungen aufweisen.

Die Suchfenster werden günstigerweise am linken und rechten Rand einer aktuellen Fahrspur platziert, da dort die Fahrspurmarkierungen üblicherweise zu erwarten sind. Für die einzelnen Fahrspurmarkierungen können dann getrennt Gütemaße ermittelt werden. So ist es vorteilhaft, für die Suchfenster am linken Rand und die Suchfenster am rechten Rand der Fahrspur jeweils eine eigenes Gütemaß zu errechnen. Dies ist insbesondere dann hilfreich, wenn nur eine Fahrspurmarkierung, z. B. die Mittellinie, auf der Straße markiert ist.

Die Suchfenster werden günstigerweise bezüglich der Fahrbahn äquidistant platziert. Dadurch kann dem Fahrer eine kontinuierliche Hilfestellung beim Befahren der Straße gewährt werden.

Die vorliegende Erfindung wird nun anhand der beigefügten Zeichnungen näher erläutert, in denen zeigen:
- Figur 1: ein Videobild einer geraden Fahrbahn mit Spurmarkierungen und entsprechend platzierten Suchfenstern;
- Figur 2: ein Videobild einer Kurve und ebenfalls entsprechend platzierten Suchfenstern; und
- Figur 3: ein Ablaufdiagramm zur Ermittlung eines Gütemaßes bei der Spurerkennung.

Die nachfolgend näher beschriebenen Ausführungsbeispiele stellen bevorzugte Ausführungsformen der vorliegenden Erfindung dar.

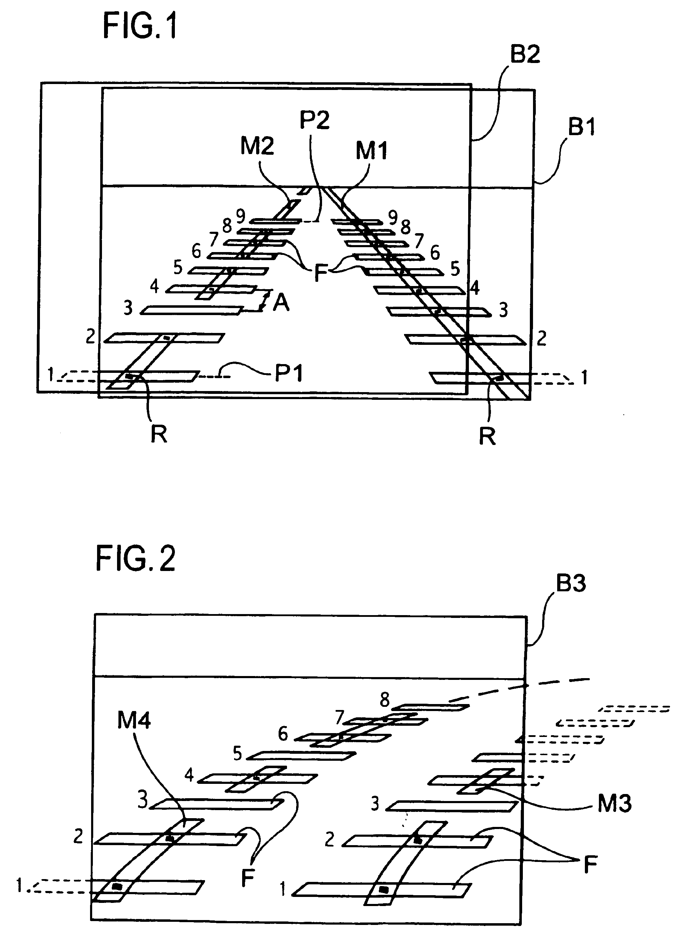

Das in Figur 1 wiedergegebene Videobild zeigt in einem ersten Sichtfeld B1 eine gerade Fahrbahn mit einer rechten, durchgezogenen Fahrspurmarkierung M1 und eine linke, gestrichelte Fahrspurmarkierung M2. Auf jeder der beiden Fahrspurmarkierungen M1 und M2 sind jeweils Suchfenster F platziert. Sie sind zwischen einem Startpunkt P1 und einem Endpunkt P2 äquidistant angeordnet und im vorliegenden Beispiel auf jeder der beiden Fahrspurmarkierungen M1 und M2 jeweils mit den Ziffern 1 bis 9 gekennzeichnet. Der Abstand A zwischen zwei Suchfenstern F beträgt beispielsweise 0,5 m. Der Startpunkt P1 liegt typischerweise 5 m vor dem Fahrzeug bzw. der Kamera und der Endpunkt P2 40 m vor dem Fahrzeug. Der Übersicht halber sind in Figur 1 jedoch nur neun Suchfenster F eingezeichnet.

Die Schnittfläche eines horizontalen Suchfensters F mit einer der Spurmarkierungen M1 oder M2 ist in Figur 1 jeweils mit einer Raute R gekennzeichnet. Diese Raute R deutet an, dass in dem jeweiligen Suchfenster F eine Spurmarkierung M1, M2 erkannt wurde. Im vorliegenden Beispiel sind sowohl auf der linken Seite als auch auf der rechten Seite jeweils neun nutzbare Suchfenster platziert. Auf der rechten Seite wird in jedem der Suchfenster F die Spurmarkierung M1 erkannt. Hingegen werden auf der linken Seite in den Fenstern 3 und 9 keine Spurmarkierungen M2 detektiert, da es sich hier um eine gestrichelte Linie handelt, so dass insgesamt nur in sieben der neun Suchfenster die linke Markierung M2 erkannt wird.

Aus der Anzahl der erkannten Spurmarkierungen lässt sich nun ein Gütemaß für die Spurerkennung berechnen. Als Gütemaß sei der Quotient aus der Anzahl der Suchfenster, in denen eine Spurmarkierung erkannt wurde, und der Anzahl der Suchfenster, die maximal nutzbar sind, definiert. Im vorliegenden Fall ergibt sich für die Güte der Spurerkennung der rechten Spurmarkierung M1 der Quotient 9/9 = 100 % und für die linke Spurmarkierung M2 der Quotient 7/9 = 78 %.

In diesem Beispiel wurden sämtliche neun Fenster auf jeder Seite ausgewertet, auch wenn die mit "1" gekennzeichneten Suchfenster F aus dem Bildbereich B1 ragen. Würden nur die vollständig im Bildbereich B1 liegenden Suchfenster F berücksichtigt werden, so läge die Maximalzahl der nutzbaren Suchfenster F bei acht. Folglich ergäben sich entsprechend andere Gütemaße.

Fährt das Fahrzeug nun nicht direkt in der Fahrspurmitte, sondern etwas nach links versetzt, so würde ein Sichtfeld bzw. Bildbereich B2 resultieren, der gemäß Figur 1 entsprechend nach links versetzt ist. Bei der Vorgabe, dass nur die vollständig im Bildbereich B2 liegenden Suchfenster F ausgewertet werden, sind für die rechte Fahrspurmarkierung nur die Suchfenster F mit den Nummern 4 bis 9 bewertbar. Dies bedeutet, dass maximal sechs Suchfenster für die rechte Fahrspurmarkierung M 1 zur Verfügung stehen. In allen dieser sechs Suchfenster wird die Fahrspurmarkierung M1 erkannt, so dass sich auch hier für die rechte Spurmarkierung M1 als Gütemaß 100 % ergibt, was aus dem Quotienten 6/6 resultiert. Für die linke Fahrspurmarkierung M2 bleibt der Quotient und damit auch die Güte unverändert. Erfindungsgemäß führt der Seitenversatz des Fahrzeugs zu keiner Güteveränderung. Würde die Maximalzahl der nutzbaren Fenster nicht situationsabhängig angepasst und stets die Maximalzahl der Suchfenster als Bezugsgröße verwendet werden, so würde sich bei dem Seitenversatz eine Gütereduzierung bei der Erkennung der rechten Fahrspurmarkierung auf 6/9 = 67 % ergeben. Dies ist jedoch der Situation nicht angemessen.

Figur 2 zeigt das Videobild einer nach rechts gekrümmten Fahrspur. In diesem Beispiel ist sowohl die rechte Fahrspurmarkierung M3 als auch die linke Fahrspurmarkierung M4 als gestrichelte Linie ausgeführt. Die Suchfenster F sind entsprechend einer aus den erkannten Fahrspurmarkierungen getroffenen Vorhersage platziert.

Für die rechte Spurmarkierung M3 sind drei Suchfenster F mit den Nummern 1 bis 3 im Bildbereich B3 so platzierbar, dass sie mit einer Hälfte zuzüglich der halben Spurmarkierungsbreite im Bildbereich B3 liegen. Das Suchfenster mit der Nummer 4 liegt definitionsgemäß bereits außerhalb des Bildbereichs B3. Dies bedeutet, dass für die rechte Spurmarkierung M3 maximal drei Suchfenster zum Erkennen der Spurmarkierung zur Verfügung stehen. Für die linke Spurmarkierung M4 stehen dementsprechend acht Suchfenster F bereit.

Auf der rechten Seite wird in dem Suchfenster mit der Nummer 3 keine Spurmarkierung M3 erkannt. Somit ergibt sich für die Erkennung der rechten Spurmarkierung M3 die Güte 2/3 = 67 %.

Auf der linken Seite kann in den Suchfenstern mit den Nummern 3, 5 und 8 keine Spurmarkierung M4 erfasst werden. Es werden also nur in fünf der acht Suchfenster F eine Markierung erkannt. Dementsprechend liegt die Güte für die Erkennung der linken Fahrspurmarkierung M4 bei 5/8 = 63 %.

Würde auch in dem Beispiel von Figur 2 grundsätzlich die Maximalzahl von neun Suchfenstern (entsprechend dem Beispiel von Figur 1) als Bezugsgröße verwendet werden, so ergäbe sich links eine Güte von 5/9 = 56 % und rechts eine Güte von 2/9 = 22 %. Läge der Schwellwert für die Nutzung einer Fahrspurmarkierung bei einer Güte von 40 %, so würde das Fahrerassistenzsystem die Fahrspurerkennung der rechten Fahrspur M3 für die Unterstützung des Fahrers nicht mehr heranziehen. Mit dem erfindungsgemäßen Verfahren, bei dem die Güte für die Erkennung der rechten Fahrspur hier bei 67 % liegt, könnte sich das Fahrerassistenzsystem nach wie vor auf die Erkennung der rechten Fahrspurmarkierung M3 stützen.

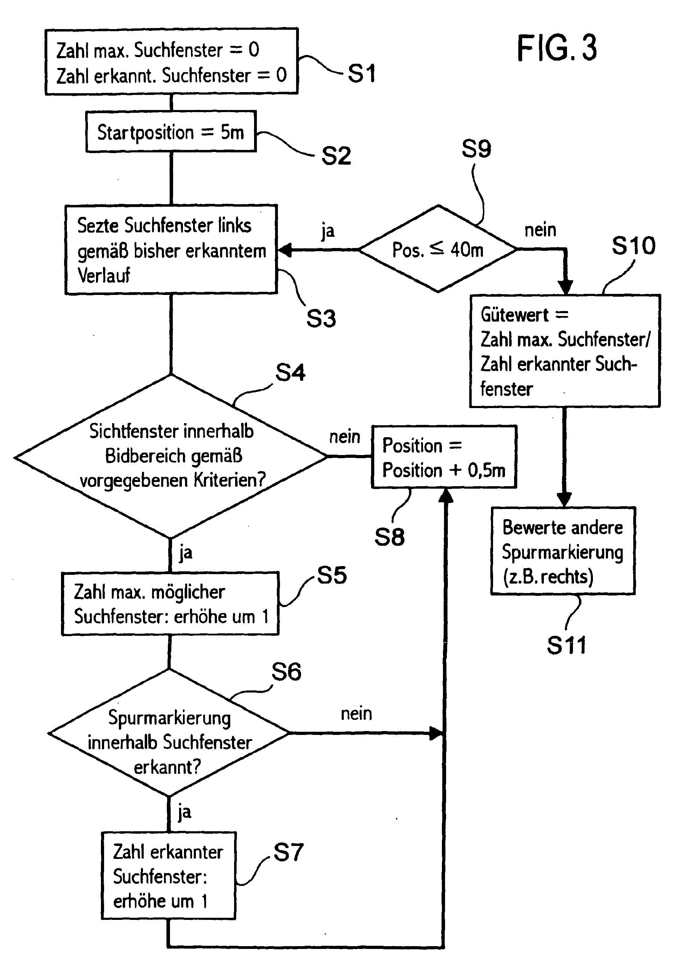

Ein konkretes Beispiel eines Ablaufdiagramms für das erfindungsgemäße Verfahren ist in Figur 3 schematisch wiedergegeben. In einem Initialisierungsschritt S1 wird eine Variable für die Zahl der maximal zur Verfügung stehenden Suchfenster und eine Variable für die Anzahl der Suchfenster, in denen eine Spurmarkierung erkannt wird, auf null gesetzt. In einem anschließenden Schritt S2 wird die Startposition P1 (vergleiche Figur 1) auf 5 m festgelegt.

In den weiteren Schritten S3 bis S10 wird ein Gütemaß für die Erkennung einer linken Fahrspurmarkierung ermittelt. Hierzu wird zunächst in Schritt S3 ein weiteres Suchfenster auf die linke Fahrspurmarkierung gemäß dem bisher erkannten Verlauf gesetzt. Im Beispiel von Figur 1 wäre dies ein Suchfenster Nr. 10 auf der linken Fahrspurmarkierung M2.

In einer anschließenden Abfrage S4 wird entschieden, ob das neu gesetzte Suchfenster innerhalb des Bildbereichs liegt. Hierzu können vorbestimmte Kriterien untersucht werden. Beispielsweise könnte im Gegensatz zum oben gewählten Beispiel als Kriterium gelten, ob das Suchfenster vollständig im Bildbereich liegt. Ist dies der Fall, so wird in Schritt S5 die Zahl der maximal möglichen Suchfenster um eins erhöht. Liegt das Suchfenster jedoch außerhalb des Bildbereichs, so wird die Anzahl der maximal nutzbaren Suchfenster nicht erhöht und es findet ein Sprung zu Schritt S8 statt, bei dem eine Positionsvariable um die gewählte Schrittweite von 0,5 m für die Positionierung des nächsten Suchfensters erhöht wird.

Falls jedoch die Zahl der maximal möglichen Suchfenster in Schritt S5 um eins erhöht wurde, wird anschließend in Schritt S6 überprüft, ob eine Spurmarkierung innerhalb des Suchfensters erkannt wurde. Ist dies der Fall, so wird die Variable, in der die Zahl der "erkannten" Suchfenster abgelegt ist, um eins in Schritt S7 erhöht. Daran anschließend erfolgt ein Sprung zu Schritt S8. Wird in Schritt S6 keine Spurmarkierung innerhalb des aktuellen Suchfensters erkannt, so erfolgt unmittelbar ein Sprung zu S8. Nach Erhöhung der Positionsvariablen in Schritt S8 wird in Schritt S9 überprüft, ob die Endposition zur Platzierung der Suchfenster erreicht ist. Dies erfolgt, indem die Positionsvariable mit der vorgebbaren Endposition (hier 40 m) verglichen wird. Ist die Positionsvariable noch kleiner als die Endposition, so wird in einem erneuten Schritt S3 ein weiteres Suchfenster gesetzt. Ist dagegen die Endposition in Schritt S9 erreicht, so wird in Schritt S10 ein Gütewert für die Spurerkennung der linken Fahrspurmarkierung berechnet. Dieser Gütewert ergibt sich - wie bereits erwähnt - aus dem Quotienten der Zahl der maximal nutzbaren Suchfenster und der Zahl der "erkannten" Suchfenster.

Im Anschluss an die Berechnung des Gütewerts für die linke Fahrspurerkennung kann ein Gütewert für eine Erkennung einer anderen Fahrspurmarkierung ermittelt werden. Dies ist in Figur 3 für die rechte Fahrspurerkennung durch Schritt S11 angedeutet.

## Patentansprüche

1. Verfahren zum Assistieren eines Fahrers eines Kraftfahrzeugs durch
- Erfassen eines Bilds (B1 bis B3) einer Fahrbahn und einer Fahrspurbegrenzung (M1 bis M4),
- Platzieren (S3) von mehreren Suchfenstern (F) in dem Bild (B1 bis B3) und/oder außerhalb des Bilds anhand einer Fahrspurvorhersage,
- Ermitteln eines Fahrspurverlaufs durch Erfassen jeweiliger Positionen der Fahrspurbegrenzung (M1 bis M4) in zumindest einigen der mehreren Suchfenstern (F) in dem Bild (B1 bis B3), und
- Gewinnen (S10) eines Gütemaßes aus der Anzahl der Suchfenster, in denen die Fahrspurbegrenzung erfasst ist,
**dadurch gekennzeichnet, dass**
- beim Gewinnen des Gütemaßes berücksichtigt wird, wie viele Suchfenster (F) zumindest teilweise innerhalb des Bilds (B1 bis B3) liegen.

2. Verfahren nach Anspruch 1, wobei beim Gewinnen (S10) des Gütema-ßes nur diejenigen Suchfenster (F) berücksichtigt werden, die vollständig in dem Bild (B1 bis B3) liegen.

3. Verfahren nach Anspruch 1 oder 2, wobei die Fahrspurbegrenzung (M1 bis M4) eine Spurmarkierung umfasst.

4. Verfahren nach einem der vorhergehenden Ansprüche, wobei die Fahrspurbegrenzung einen Fahrbahnrand umfasst.

5. Verfahren nach einem der vorhergehenden Ansprüche, wobei die Suchfenster (F) am linken und rechten Rand einer aktuellen Fahrspur platziert werden.

6. Verfahren nach Anspruch 5, wobei für die Suchfenster am linken Rand und die Suchfenster (F) am rechten Rand der Fahrspur jeweils ein eigenes Gütemaß gewonnen wird.

7. Verfahren nach einem der vorhergehenden Ansprüche, wobei die Suchfenster (F) bezüglich der Fahrbahn äquidistant platziert werden.

8. Vorrichtung zum Assistieren eines Fahrers eines Kraftfahrzeugs mit
- einer Erfassungseinrichtung zum Erfassen eines Bilds (B1 bis B3) einer Fahrbahn und einer Fahrspurbegrenzung (M1 bis M4) und
- einer Datenverarbeitungseinrichtung zum Platzieren (S3) von mehreren Suchfenstern (F) in dem Bild (B1 bis B3) und/oder außerhalb des Bilds anhand einer Fahrspurvorhersage, zum Ermitteln eines Fahrspurverlaufs durch Erfassen jeweiliger Positionen der Fahrspurbegrenzung (M1 bis M4) in zumindest einigen der mehreren Suchfenstern (F) in dem Bild, sowie zum Gewinnen (S10) eines Gütemaßes aus der Anzahl der Suchfenster, in denen die Fahrspurbegrenzung erfasst ist,
**dadurch gekennzeichnet, dass**
- in der Datenverarbeitungseinrichtung beim Gewinnen (S10) des Gütemaßes berücksichtigbar ist, wie viele Suchfenster (F) zumindest teilweise innerhalb des Bilds liegen.

9. Vorrichtung nach Anspruch 8, wobei in der Datenverarbeitungseinrichtung zum Gewinnen (S10) des Gütemaßes diejenigen Suchfenster (F) selektierbar sind, die vollständig in dem Bild (B1 bis B3) liegen.

10. Vorrichtung nach Anspruch 8 oder 9, wobei die Fahrspurbegrenzung (M1 bis M4) eine Spurmarkierung umfasst.

11. Vorrichtung nach einem der Ansprüche 8 bis 10, wobei die Fahrspurbegrenzung einen Fahrbahnrand umfasst.

12. Vorrichtung nach einem der Ansprüche 8 bis 11, wobei die Suchfenster (F) gezielt am linken und rechten Rand einer aktuellen Fahrspur platzierbar sind.

13. Vorrichtung nach Anspruch 12, wobei für die Suchfenster (F) am linken Rand und die Suchfenster (F) am rechten Rand der Fahrspur jeweils ein eigenes Gütemaß ermittelbar ist.

14. Vorrichtung nach einem der Ansprüche 8 bis 13, wobei die Suchfenster (F) bezüglich der Fahrbahn äquidistant platzierbar sind.

## Claims

1. Method for assisting a driver of a motor vehicle by
- detecting an image (B1 to B3) of a road and a lane boundary (M1 to M4),
- placing (S3) a plurality of search windows (F) in the image (B1 to B3) and/or outside the image, based on a lane prediction,
- determining the course of the lane by detecting respective positions of the lane boundary (M1 to M4) in at least some of the plurality of search windows (F) in the image (B1 to B3), and
- obtaining (S10) a measure of goodness from the number of search windows in which the lane boundary is detected,
**characterised in that**
- when obtaining the measure of goodness, account is taken of how many search windows (F) lie at least partially within the image (B1 to B3).

2. Method according to claim 1, wherein, when obtaining (S10) the measure of goodness, only those search windows (F) which lie entirely within the image (B1 to B3) are taken into account.

3. Method according to claim 1 or 2, wherein the lane boundary (M1 to M4) comprises a lane marking.

4. Method according to one of the preceding claims, wherein the lane boundary comprises a road edge.

5. Method according to one of the preceding claims, wherein the search windows (F) are placed on the left and right edges of a current lane.

6. Method according to claim 5, wherein for the search windows at the left edge and the search windows (F) at the right edge of the lane, respectively, a separate measure of goodness is obtained.

7. Method according to one of the preceding claims, wherein the search windows (F) are placed equidistantly in relation to the road.

8. Device for assisting a driver of a motor vehicle, having
- a detecting device for detecting an image (B1 to B3) of a road and a lane boundary (M1 to M4) and
- a data-processing device for placing (S3) a plurality of search windows (F) in the image (B1 to B3) and/or outside the image based on a lane prediction, for determining a lane course by detecting respective positions of the lane boundary (M1 to M4) in at least some of the plurality of search windows (F) in the image, and for obtaining (S10) a measure of goodness from the number of search windows in which the lane boundary is detected,
**characterised in that**
- in the data processing device, when obtaining (S10) the measure of goodness, the number of search windows (F) which lie at least partially within the image may be taken into account.

9. Device according to claim 8, wherein in the data processing device, for obtaining (S10) the measure of goodness, those search windows (F) which lie entirely within the image (B1 to B3) may be selected.

10. Device according to claim 8 or 9, wherein the lane boundary (M1 to M4) comprises a lane marking.

11. Device according to one of the claims 8 to 10, wherein the lane boundary comprises a road edge.

12. Device according to one of the claims 8 to 11, wherein the search windows (F) may be placed in a targeted manner at the left and right edge of a current lane.

13. Device according to claim 12, wherein for the search windows (F) at the left edge and the search windows (F) at the right edge of the lane, respectively, a separate measure of goodness may be obtained.

14. Device according to one of the claims 8 to 13, wherein the search windows (F) may be placed equidistantly in relation to the road.

## Revendications

1. Procédé d'assistance à un conducteur d'un véhicule automobile grâce
- à l'acquisition d'une image (B1 à B3) d'une route et d'une limite de voie de circulation (M1 à M4),
- au placement (S3) de plusieurs fenêtres de recherche (F) dans l'image (B1 à B3) et / ou en dehors de l'image à l'aide d'une prévision de voie de circulation,
- à la détermination d'un tracé de voie de circulation grâce à la saisie des positions respectives de la limite de voie de circulation (M1 à M4) dans au moins certaines des multiples fenêtres de recherche (F) dans l'image (B1 à B3), et
- à l'obtention (S10) d'un indice de qualité à partir du nombre de fenêtres de recherche, dans lesquelles la limite de voie est saisie,
**caractérisé en ce que**
- lors de l'obtention d'un indice de qualité, il est pris en considération le nombre de fenêtres de recherche (F) se trouvant au moins partiellement à l'intérieur de l'image (B1 à B3).

2. Procédé conformément à la revendication 1, dans lequel seules les fenêtres de recherche (F) qui se situent entièrement dans l'image (B1 à B3) sont prises en compte pour l'obtention (S10) de l'indice de qualité.

3. Procédé conformément à la revendication 1 ou 2, dans lequel la limite de voie de circulation (M1 à M4) comprend un marquage de voie.

4. Procédé conformément à l'une des revendications précédentes, dans lequel la limite de voie de circulation comprend un bord de route.

5. Procédé conformément à l'une des revendications précédentes, dans lequel les fenêtres de recherche (F) sont placées sur le bord gauche et droit d'une voie de circulation actuelle.

6. Procédé conformément à la revendication 5, dans lequel un propre indice de qualité est respectivement obtenu pour les fenêtres de recherche sur le bord gauche et les fenêtres de recherche (F) sur le bord droit de la voie de circulation.

7. Procédé conformément à l'une des revendications précédentes, dans lequel les fenêtres de recherche (F) sont placées à équidistance par rapport à la route.

8. Dispositif d'assistance à un conducteur d'un véhicule automobile avec
- un dispositif d'acquisition pour l'acquisition d'une image (B1 à B3) d'une route et d'une limite de voie de circulation (M1 à M4) et
- un système de traitement de données pour le placement (S3) de plusieurs fenêtres de recherche (F) dans l'image (B1 à B3) et / ou en dehors de l'image à l'aide d'une prévision de voie de circulation, pour la détermination d'un tracé de voie de circulation grâce à l'acquisition des positions respectives de la limite de voie de circulation (M1 à M4) dans au moins certaines des multiples fenêtres de recherche (F) dans l'image, ainsi que pour l'obtention (S10) d'un indice de qualité à partir du nombre de fenêtres de recherche, dans lesquelles la limite de voie de circulation est saisie,
**caractérisé en ce que**
- dans le système de traitement de données pour l'obtention (S10) de l'indice de qualité, le nombre de fenêtres de recherche (F) se trouvant au moins partiellement à l'intérieur de l'image (B1 à B3) peut être pris en considération.

9. Dispositif conformément à la revendication 8, dans lequel les fenêtres de recherche (F) se trouvant entièrement dans l'image (B1 à B3) sont sélectionnables dans le système de traitement de données pour l'obtention (S10) de l'indice de qualité.

10. Dispositif conformément à la revendication 8 ou 9 dans lequel, la limite de voie de circulation (M1 à M4) comprend un marquage de voie.

11. Dispositif conformément à l'une des revendications 8 à 10, dans lequel la limite de voie de circulation comprend un bord de route.

12. Dispositif conformément à l'une des revendications 8 à 11, dans lequel les fenêtres de recherche (F) peuvent être placées de manière ciblée sur le bord gauche et droit d'une voie de circulation actuelle.

13. Dispositif conformément à la revendication 12, dans lequel un propre indice de qualité est respectivement déterminable pour les fenêtres de recherche sur le bord gauche et les fenêtres de recherche (F) sur le bord droit de la voie de circulation.

14. Dispositif conformément à l'une des revendications 8 à 13, dans lequel les fenêtres de recherche (F) peuvent être placées à équidistance par rapport à la route.
